# EUROPEAN PATENT APPLICATION

(11) **EP 1 808 255 A1**
(43) Date of publication of application: **18.07.2007**
(21) Application number: 06075068.4
(22) Date of filing: 11.01.2006
(51) Int. Cl.: B23K 1/00, B23K 35/36

(54) **Method of manufacturing a brazed assembly**

(71) Applicant: Corus Aluminium Walzprodukte GmbH, 56070 Koblenz (DE); Corus L.P., Cap-de-la-Madeleine Québec G8T 7W9 (CA)
(72) Inventor: Wittebrood, Adrianus Jacobus, 1991 HB Velserbroek (NL)
(74) Representative: Müller, Frank Peter

(57) **Abstract**

The present invention relates to a method of manufacturing a shaped product by means of brazing, the method comprising the steps of:
a. producing an intermediate object of metal by rolling or extrusion and having at least one flat surface,
b. coating the at least one surface with a brazing composition comprising a resin, a wax, and a flux and/or flux-producing compound,
c. reshaping of the intermediate object into a shaped product, and
d. heating the shaped product to a temperature sufficient to provide at least one brazed connection between defined parts of the shaped product.

When a brazing composition according to the present invention is used in this method, it is not necessary to use an additional lubricant during deforming.

## Description

This invention relates to a method of manufacturing a shaped product by means of brazing to form a brazed assembly, and to a metal substrate having a defined coating of brazing composition and to the use of such a brazing composition in the method.

Substrates of aluminium or aluminium alloy in the form of sheet or extrusion, are used to make shaped, or formed, products. In some of these processes parts of (shaped) aluminium comprising substrates are interconnected. One end of a substrate may be interconnected with the other end, or one substrate may be assembled with one or more other substrates. This is commonly done by brazing. In a brazing process, a brazing filler metal or brazing alloy, or a composition producing a brazing alloy upon heating, is applied to at least one portion of the substrate to be brazed. After the substrate parts are assembled, they are heated until the brazing metal or brazing alloy melts. The melting point of the brazing material is lower than the melting point of the aluminium comprising substrate(s).

Brazing, by definition, employs a filler metal, also referred to as a brazing alloy, having a liquidus above 450°C and below the solidus of the base metal. Brazing is distinguished from soldering by the melting point of the filler metal: solders melt below 450°C.

Brazing sheet products finds wide applications in heat exchangers and other similar equipment. Conventional brazing products have a core of rolled sheet, typically an aluminium alloy of the Aluminium Association (AA)3000-series, having on at least one surface of said cores sheet clad an aluminium clad layer, the aluminium clad layer being made of an AA4000-series alloy comprising silicon in an amount in the range of 2 to 18 % by weight, and preferably in the range of 7 to 14 % by weight. The aluminium clad layer may be coupled to the core alloy in various ways known in the art, for example by means of roll bonding, cladding spray-forming or semi-continuous or continuous casting processes. These aluminium clad layers have a liquidus temperature typically in the range of 575 to 605°C.

Controlled Atmosphere Brazing ("CAB") and Vacuum Brazing ("VB") are the two main processes used for industrial scale aluminium brazing. Industrial vacuum brazing has been used since the 1950's, while CAB became popular in the early 1980's after the introduction of the Nocoloc^{®} (trade mark) brazing flux.

Vacuum brazing is an essentially discontinuous process and puts high demands on material cleanliness. The disruption of the oxide layer present is mainly caused by the evaporation of magnesium from the clad alloy. There is always more magnesium present in the furnace then necessary. The excess magnesium condenses on the cold spots in the furnace and has to be removed frequently.

CAB requires an additional process step prior to brazing as compared to VB, since a brazing flux has to be applied prior to brazing. CAB is essentially a continuous process in which, if the proper brazing flux is being used, high volumes of brazed assemblies can be manufactured. The brazing flux dissolves amongst others the oxide layer at brazing temperature allowing the clad alloy to flow properly, A flux composition comprises a flux, or fluxing agent, for example an oxyfluoroaluminium, a hydroxyfluoroaluminium, a potassium fluoroaluminate, a fluoroborate, or a fluoro-zincate. When the Nocoloc^{®} flux or other flux compositions are used the surface needs to be cleaned thoroughly prior to flux application. To obtain good brazing results the brazing flux has to be applied on the total surface of the brazed assembly. This can cause difficulties with certain types of assemblies because of their design. For example, because evaporator type heat exchangers have a large internal surface, problems can arise because of poor access to the interior. For good brazing results the flux has to adhere to the aluminium surface before brazing. Unfortunately the brazing flux after drying can easily fall off due to small mechanical vibrations.

It is know, e.g. this is described in WO-00/64626 and WO-03/037559, to apply a flux composition as a coating to an aluminium or aluminium comprising substrate before such substrate is shaped or formed into a shaped product, and brazed at a later stage. This is advantageous since the flux composition can be applied as a coating to a sheet-type or extruded-type substrate.

In WO-031037559-A1 and WO-00/64626 flux compositions are described comprising a synthetic resin which mainly comprises a methacrylate homopolymer, a methacrylate copolymer or a olefin-acrylate copolymer. The flux compositions are applied to a sheet like aluminium or aluminium containing substrates, these substrates are shaped, and after the shaping the brazing takes place. However, to facilitate this shaping process it is generally required to use a lubricant, e.g. a lubricating oil. This lubricant has to be removed before or after the brazing process.

In US-6,497,770 flux compositions are described that contains a binder of an alkyd resin, a mixture of an acrylic resin and a butyl rubber (or a petroleum resin), and/or a polyethylene resin. It is stated that a product coated with a flux composition comprising a butyl rubber can be more easily subjected to plastic working after coating.

EP-1233345-A2 describes a process in which a surface of an aluminium member is coated with a resin; the aluminium member is subsequently deformed, and then joined with another resin-coated aluminium member. The resin is fused to join the aluminium members. In a preferred process, a resin having lubricating properties is used so that the deformation step of the aluminium substrate can be performed without using an additional lubricant. However, only few lubricating resins are mentioned (polyester resin, nylon resin, and vinylidene fluoride resin) and normally the bond formed between the aluminium members using a process as described in EP-1233345-A2 will be less strong than the bond formed in a metal brazing process.

The present invention relates to a method of manufacturing a shaped product by means of brazing, whereby a specific coating is being used that can be applied to sheet or extruded material, that can be shaped into various forms without the need to use an additional lubricant.
The method according to the present invention comprising the steps of:
a. producing an intermediate object of metal, preferably of aluminium or aluminium alloy, by rolling or extrusion and having at least one flat surface,
b. coating the at least one surface with a brazing composition comprising a resin, a wax, and a flux and/or flux-producing compound,
c. reshaping of the intermediate object into a shaped product, and
d. heating the shaped product to a temperature sufficient to provide at least one brazed connection between defined parts of the shaped product and thereby forming a brazed assembly,
and preferably immediately following the brazing operation the brazed assembly is being cooled to below 100°C, preferably by using a cooling rate of at least 20°C/min, and more preferably at least 40°C/min.

Within the framework of the present invention, a wax is a naturally occurring or synthetic material that is solid at 20°C. The melting point of a wax normally is at least 40°C, and at its melting temperature the material does not decompose. Waxes that are suitable for use in a brazing composition employed according to the present invention may have a consistency at 20°C ranging from soft and plastic to brittle and hard.

An advantage of the brazing composition used according to the present invention is that the brazing composition of the present invention is self lubricating, in other words, the frictional properties are improved. Hence, for example an aluminium alloy substrate which is coated with a flux composition according to the present invention can be deformed without using an additional lubricant. Nevertheless, it has been found that the brazing composition may be used with regular lubricants for forming of a coated substrate without the loss of brazing characteristics. The brazing composition also works as an anti-blocking agent during the deformation. For example, the wax in the composition reduces or eliminates the problem of sticking of the flux composition to the deformation equipment Further, the use of a brazing composition according to the present invention reduces the wear on the deformation equipment. Additionally, a substrate coated with a flux composition according to the present invention does not need to be cleaned and dried after deforming.

Another advantage is the improved scratch and abrasion resistance of the substrate because the brazing composition forms a protective layer, especially during deforming such as by bending. An applied layer of the brazing composition of the present invention has, optionally after drying and/or curing, an improved resistance to damage compared to conventional flux compositions.

The brazing composition used according to the present invention is very suitable to be used in a controlled application process. It is relatively easy to obtain a uniform application of the brazing composition of the invention. A uniformly applied flux composition is advantageous as it results in an improved flux distribution. An improved flux distribution is advantageous as it results in an improved joint quality, a reduced rejection rate, and reduced waste when the substrate is brazed.

The metal substrate having at least one flat surface may be in the form of a sheet material, a plate material, or an extrusion. These aluminium alloys are then used as the structural member, for which both non-heat treatable as heat treatable aluminium alloys may be applied. Typically material selected from the Aluminium Association AA3xxx, AA5xxx and AA6xxx series aluminium alloys are used.

In the embodiment that the metal substrate of made from an aluminium alloy the shaped product can be for example also a folded tube, or a welded tube, or a wrapped tube, preferably the wrapped tube is a manifold tube. A wrapped tube is especially useful in high pressure applications such as brake lines or hydraulic applications. This kind of tube types are known to the person skilled in the art.

In an embodiment the intermediate object prior to the reshaping is being coiled once it has been coated. Coils of the composite sheet material as such may be supplied to the manufacturer of brazed assemblies, which overcomes all necessary processing steps related to applying and removing of the brazing flux at this side.

The flux or flux-producing compound in the brazing composition according to the present invention may be chloride comprising, and preferably comprises fluoride. Preferably the flux or flux-producing compound is solid at room temperature, more preferably it is added to the composition as a powder. The brazing composition may comprise a mixture of one or more flux compounds and/or one or more flux-producing compounds. Preferably the amount of flux or flux-producing compound applied on the flat surface is in a range of 0.5 to 10 g/m², and more preferably in a range of 1 to 6 g/m².
As examples of fluoride comprising flux compounds the following compounds can be mentioned. Potassium fluoride (KF), aluminium fluoride (AlF₃), caesium fluoride (CsF), rubidium fluoride (RbF), lithium fluoride (LiF), sodium fluoride (NaF), and calcium fluoride (CaF₂)- Potassium fluoroaluminates such as potassium tetrafluoroaluminate (KAlF₄), potassium pentafluoroaluminate (K₂AlF₅, K₂AlF₅.H₂O), and potassium hexafluoroaluminate (K₃AlF₆). Examples of such fluxes have been described in GB-1438955-A, US-4,428,920, US-3,951,328, US-5,318,764, and US- 4,579,605. Oxyfluoroaluminum such as Al₂F₄O and AlFO. Hydroxyfluoroaluminium such as AlF₂(OH). AIF₂(OH).H₂0, and AlF(OH)₂. Fluoroborates such as potassium tetrafluoroborate (KBF₄) and sodium tetrafluoroborate (NaBF₄). Examples of such fluxes have been described in GB-899171-A, GB-1007039-A, and US-4,235,649. Fluorozincates such as potassium trifluorozincate (KZnF₃), potassium tetrafluorozincate (K₂ZnF₄), caesium trifluorozincate (CsZnF₃), and caesium tetrafluorozincate (Cs₂ZnF₄). Examples of such fluxes have been described in DE-19913111-A and WO-9948641-A. Alkali metal fluorosilicates such as caesium hexafluorosilicate (Cs₂SiF₆), potassium hexafluorosilicate (K₂SiF₆), lithium hexafluorosilicate (Si₂SiF₆), rubidium hexafluorosilicate (Rb₂SiF₆), sodium hexafluorosilicate (Na₂SiF₆), and ammonium hexafluorosilicate ((NH₄)₂SiF₆). Examples of such fluxes have been described in US-5,785,770, DE-19636897-A, US-5,985,233, US-6,019,856-A, US 5980650, and WO-98/10887-A. Alkali bimetal fluorosilicates such as potassium caesium hexafluorosilicate (KCsSiF₆), lithium caesium hexafluorosilicate (LiCsSiF₆), rubidium caesium hexafluorosilicate (RbCsSiF₆), rubidium potassium hexafluorosilicate (RBKSlF₆) and ammonium caesium hexafluorosilicate (NH₄C_{S}SiF₆). Alkali metal bifluorosilicates (also referred to as alkali metal hydrofluorosilicates) such as caesium hydrofluorosilicate (CsHSiF₆), potassium hydrofluorosilicate (KHSiF₆), lithium hydrofluorosilicate (LiHSiF₆), and ammonium hydrofluorosilicate (NH₄HSiF₆). Caesiumfluoroaluminate complexes such as caesium fluoride (CsF), caesium hexafluoroaluminate (Cs₃AlF₆), caesium tetrafluoroaluminate (CsAlF₄, CsAlF₄.H₂O), and caesium pentafluoroaluminate (CsAlF₅, CsAlF₅.H₂O). Examples of such fluxes have been described in US-4,670,067, US-5,171,377, US-5,806,752, US,5,771,962, and US-4,655,385. So-called super-fluid fluxes can be used as well.

As examples of flux-producing compounds the following compounds and mixtures can be mentioned so-called reactive fluxes as described in WO-01/38040-A. The composition may comprise fluxes based upon K₂SiF₆ or KZnF₃. This type of reactive fluxes can produce potassium fluoroaluminate, which acts as a flux material.

The brazing composition of the present invention comprises at least one flux or flux-producing compound. It may comprise mixtures of the above-mentioned examples of flux and flux-producing compounds. In one embodiment potassium fluoroaluminate(s) or compound(s) producing potassium fluoroaluminates, or mixtures thereof, are used. As examples of commercially available potassium fluoroaluminate comprising flux materials can be mentioned: Nocolok^{®} and Nocolok Sil^{®} (ex Solvay Chemicals).

The brazing composition according to the present invention comprises a resin. In one embodiment, this resin is a synthetic resin. In a further embodiment, the (synthetic) resin comprises as its main constituent, an acrylic acid ester, preferably a methacrylic acid ester. In a further embodiment the resin mainly comprises a methacrylate homopolymer or a methacrylate copolymer. It is also possible to use mixtures of such resins.

As examples of monomers that can be used to prepare such resin(s) can be mentioned: methyl methacrylate, ethyl methacrylate, propyl methacrylate, 2-methylpropyl methacrylate, n-butyl methacrylate, t-butyl methacrylate, 2-ethylhexyl methacrylate, octyl methacrylate, isodecyl methacrylate, lauryl methacrylate, tridecyl methacrylate, stearyl methacrylate, cyclohexyl methacrylate, benzyl methacrylate, diethylaminoethyl methacrylate, 2-hydroxyethyl methacrylate, dimethylaminoethyl methacrylate, t-butylaminoethyl methacrylate, glcidyl methacrylate, metatetrahydrofurfuryl methacrylate.

In a further embodiment the resin used in the present invention evaporates and/or easily decomposes during the brazing process, and can thus attain an excellent outward appearance of a brazed portion after brazing, without causing brazing insufficiency such as residual carbon.

In a further embodiment the resin is a synthetic resin comprising 90-100 wt% of an acrylic acid ester, for example the resin comprises 90-100 wt% polymethyl methacrylate.

Preferably the resin has a composition which volatilizes in the range of 175-400°C, and preferably below 350°C.

In one embodiment the wax in the brazing composition used according to the present invention is a wax that evaporates or decomposes preferably during heat-up in a brazing process, which takes place at a temperature above 450°C, and more typically takes place in the range of 500 to 640°C, more typically in the range of 560 to 620°C, when aluminium substrate is involved.

Preferably, the brazing composition used according to the present invention further comprises at least one wax. A single wax may be used, but it is also possible to use two or more waxes, for example a blend of two or more waxes. The wax may be modified or unmodified. Naturally occurring waxes, such as vegetable waxes or animal waxes, may be used. Additionally, or alternatively, synthetic waxes may be used.

In another embodiment the wax is a hydrocarbon wax, i.e. a wax consisting of carbon and hydrogen atoms and no or substantially no other atoms; the hydrocarbon wax preferably consists of more than 90%, even more preferably of more than 95% of carbon and hydrogen atoms.

In a further embodiment the wax is a polyolefin wax, i.e. an unsaturated hydrocarbon wax.

In a further embodiment mixtures of hydrocarbon waxes, hydrocarbon wax(es) and polyolefin wax(es) or mixtures of polyolefin waxes are used, and whereby mixtures of hydrocarbon wax(es) and/or polyolefin wax(es) are preferred.

The brazing composition according to the present invention may further comprise a brazing material formed by a brazing metal or brazing alloy, or a composition producing a brazing alloy upon heating. In another embodiment, the brazing material forms an eutectic alloy or near-eutectic with aluminium upon brazing. For example, the brazing composition may comprise Si, for example Si-particles in powder form, Zn, Cu, or Ge. Other examples are alloys of metals (e.g. Si, Zn, Cu, Sn, Ge) with aluminium or with zinc. Zinc alloys being another frequently used filler metal for brazing. As examples of commercially availably alloys of Si with aluminium can be mentioned AA4047 and AA 4045 (ex Solvay Chemicals).

In one embodiment the brazing alloy is an Al-Si alloy having additions of Cu and/or Zn to substantially lower the melting point of the alloy, thereby allowing a brazing operation to be carried out at lower temperatures such as 520°C, 540°C or 560°C.

In another embodiments the brazing alloy is an Al-Si-Zn hypereutectic alloy, preferably composed of a powder or mixture of powders, each powder or mixture of powders consisting essentially of one or more of Al, Si or Zn, and wherein in the Al-Si-Zn hypereutectic alloy has a composition such that Si is in a range of 14 to 45 wt.% and the Zn is in a range of 5 to 30 wt.%.

In another embodiment a low-melting brazing alloy is used for brazing at a temperature in the range of 520 to 580°C. The brazing alloy comprises 0.001 to 3.0 wt.% of rare-earth element, 20 to 50 wt.% of Zn, 10 wt.% or less of Si, optionally 0.005 to 3.0 wt.% of Ti, and the balance Al and impurities. Ti as optionally present has an effect for preventing a solidification cracking of the brazed connection. All rare-earth elements or a mixture thereof may be employed. Among these elements, misch metal, La, Ce or Sm, which can be obtained at lower cost, are preferably used.

The brazing composition may comprise one or more solvents. The viscosity of the wet brazing composition can be regulated and thus regular coating methods can be used. In one embodiment the brazing composition comprises an organic solvent.

In a further embodiment a solvent having hydrophilic properties is used. In a further embodiment a solvent or mixture of solvents is used that has good polymer solvation and/or application properties. Examples of preferred solvents are 2-propanol, 1-propanol, ethylene glycol mono-ethyl ether, di-ethylene glycol mono-ethyl ether, triethylene glycol mono-ethyl ether, ethylene glycol mono-butyl ether, propylene glycol mono-ethyl ether, propylene glycol mono ethyl ether, propylene glycol ether, propylene glycol ester, butan-1-ol, 1-methyoxy-2-propanol, 4-hydroxy-4-methyl-pentan-2-one, and 1-methaxy-2-propylacetate.

Further additives may be added to the brazing composition when used according to the present invention. For example, an anti-oxidant, an anti-corrosive agent, an anti-foaming agent, a thickener, a plasticizer, a tackifier, a coupling agent, and the like may be added. By this addition, it is possible to improve amongst others shelf stability (prevention of separation of for example the brazing alloy powder), coating properties (prevention of dripping of the applied brazing composition), etc.
Additionally, mineral oils, paraffin oils, silicone fluids and/or polysiloxane compounds may be added, as these may influence the lubricating or slip properties of the brazing composition.

The weight ratio of the flux and/or flux-producing compound(s) to the resin(s) normally is in the range of 1:2 to 6:1, preferably in the range of 1:2 to 3:1, and highly preferably in the range of 3:2 to 5:2, the weight ratio being calculated on the weight of these components in the uncured coating composition at room temperature.
The ratio of the weight of the wax(es) to the combined weight of the flux and/or flux-producing compound(s) and of the resin(s) normally is in the range of 1:99 to 30:70, preferably in the range of 1:99 to 15:85, and highly preferably in the range of 2:98 to 10:90, the weight ratio being calculated on the weight of these components in the uncured coating composition.

In case one or more dispersion agents are present, the ratio of the weight of the dispersion agent(s) to the combined weight of the flux and/or flux-producing compound(s) and of the resin(s) and of the wax(es) normally is in the range of 0.2:99.8 to 10:90, preferably in the range of 0,3:99.7 to 4:96, and highly preferably in the range of 0.4:99.6 to 3:97.

In one embodiment, a brazing composition is prepared that evaporates and/or easily decomposes at an increasing temperature during the brazing process, ideally during the heat-up cycle during brazing, in which process the brazing temperature is within the range of 500 to 640°C. In a further embodiment the brazing temperature is within the range of 560 to 620°C when aluminium alloy is the intermediate object. The decomposed resin leaves almost no carbon residue on the final shaped and brazed product. In a further embodiment the brazing is performed in an inert atmosphere, e.g. an inert nitrogen or argon atmosphere. Brazing may be performed in regular batch type furnaces or, more commonly, in continuous tunnel furnaces.

The present invention further relates to a process in which a brazing composition according to the present invention is applied to an aluminium comprising substrate. The brazing composition may be applied by means of a roller coating, a spray method, immersion method, co-extrusion, roll-transfer printing, or the like. The thickness of the brazing composition applied on the metal substrate to substantially the same over the whole surface area covered.

In the case of an (organic) solvent containing brazing composition, the solvent preferably is removed partially or completely from the brazing composition after it has been applied to the substrate. For instance, the coating may be allowed to dry naturally or may be forced to dry. In a preferred embodiment, the applied brazing composition is heated; more preferably, the applied brazing composition is heated until the brazing composition is dry, i.e, until the composition comprises less than 5 weight% of solvent, calculated on the total weight of the dried composition. Such a heating is typically carried out at a temperature of about 30 to 170°C. After application, the coating of brazing composition is completely dried before the brazing process. This is because when the brazing composition is not dried, the organic solvent is rapidly gasified to generate a gas by which the applied brazing composition may be scattered. However, when a furnace provided with a preheating chamber is used as a brazing furnace, the organic solvent is removed in the preheating step, and thus it is not always necessary to completely dry the brazing composition after application, and the brazing composition can be brazed even it is dry to the touch or nor dried. The "dry to the touch" means that the brazing composition is dried to such a degree that the composition, upon being pressed against a finger, does not adhere to the finger.

To further improve the adhesion between the brazing composition and the metal substrate, preferably an aluminium alloy substrate, the metal substrate may be cleaned or surface treated before the brazing composition is applied. In one embodiment, the surface is degreased before the brazing composition is applied. In a further embodiment, the surface of the substrate is etched using, e.g. an acid or any other etching medium, before the brazing composition is applied.
Thus the ideal application process comprises the subsequent steps of (i) cleaning the substrate, (ii) applying a coating of the brazing composition using one of the techniques described above, (iii) drying the applied coating in order to remove the solvent, if used, from the brazing composition, (iv) curing the coating, typically at elevated temperature, (v) quenching the cured coating, and in a preferred embodiment if the intermediate object is a metal sheet, preferably of an aluminium alloy, then (vi) coiling of the metal sheet having the quenched coating of brazing composition.

Once the coating of brazing composition is cured the coating on the substrate is quenched by means of air quenching or water quenching. It has been found that better lubrication characteristics are obtained when air quenching is applied.

In a further aspect of this invention it relates to metal substrate, and preferably an aluminium alloy substrate, having at least one flat surface and is at least partially covered with a coating of brazing composition as disclosed in this specification and set forth in the claimed.

In a further aspect of this invention it relates to the use or method of use of a brazing composition as disclosed in this specification and defined in the claims in manufacturing a brazed assembly of components, one of the components being the metal substrate, preferably an aluminium alloy substrate, coated with the brazing composition of this invention and being brazed, ideally by means of CAB, to another component of the brazed assembly.

## Claims

1. A method of manufacturing a shaped product by means of brazing, the method comprising the steps of:
a. producing an intermediate object of metal, preferably of aluminium or aluminium alloy, by rolling or extrusion and having at least one flat surface,
b. coating the at least one surface with a brazing composition comprising a resin, a wax, and a flux and/or flux-producing compound,
c. reshaping of the intermediate object into a shaped product, and
d. heating the shaped product to a temperature sufficient to provide at least one brazed connection between defined parts of the shaped product.

2. A method according to claim 1, wherein the reshaping at least involves a bending operation of at least one part of the flat surface of the intermediate product.

3. A method according to claim 1 or 2, wherein the reshaping of the intermediate product in the absence of the use of an additional lubricant.

4. A method according to any one of claims 1 to 3, wherein the product is a folded tube.

5. A method according to any one of claims 1 to 3, wherein the intermediate product after said coating of the at least one surface is coiled.

6. A method according to claim 5, wherein the flux and/or flux-producing compound comprises fluoride.

7. A method according to claim 5 or 6, wherein the resin comprises an acrylic acid ester.

8. A method according to any one of claims 5 to 7, wherein the brazing composition comprises a wax selected from the group comprising hydrocarbon wax, a polyolefin wax, and a mixture thereof.

9. A method according to any one of claims 5 to 8, wherein the weight ratio of the flux and/or flux-producing compound to the resin is in a range of 1:2 to 6:1.

10. A method according to any one of claims 5 to 9, wherein the brazing composition further comprises a dispersion agent.

11. A method according to any one of claims 5 to 10, wherein the brazing composition further comprises a brazing alloy or a composition of metals producing a brazing alloy upon heating.

12. A metal substrate, preferably an aluminium alloy substrate, having at least one flat surface and is at least partially covered with a brazing composition according to any one of claims 1 or 5 to 11.
